# EUROPÄISCHE PATENTSCHRIFT

(11) **EP 0 794 285 B1**
(45) Veröffentlichungstag und Bekanntmachung des Hinweises auf die Patenterteilung: **04.06.2003**
(21) Anmeldenummer: 97102479.9
(22) Anmeldetag: 15.02.1997
(51) Int. Cl.: D21F 5/04, D21G 1/00, D21G 1/02

(54) **Maschine zur Herstellung einer Bahn**
Machine for making a web
Machine pour la fabrication d'une bande

(30) Priorität: 09.03.1996 DE 19609213
(43) Veröffentlichungstag der Anmeldung: 10.09.1997
(73) Patentinhaber: Voith Paper Patent GmbH, 89522 Heidenheim (DE)
(72) Erfinder: Schmitt, Anton, 89522 Heidenheim (DE); Mack, Thomas, 89567 Sontheim (DE)

(56) Entgegenhaltungen:
- DE-A- 4 445 123
- GB-A- 921 296
- US-A- 1 547 071
- US-A- 4 705 411

## Beschreibung

Die Erfindung betrifft eine Maschine zur Herstellung einer Bahn, insbesondere einer Papier- oder Kartonbahn gemäß Oberbegriff des Anspruchs 1.

Maschinen der hier angesprochenen Art sind bekannt (US-PS 5,177,880). Die Maschinen umfassen eine Anzahl von Walzen, beispielsweise Preßwalzen, Trokkenzylinder und/oder Bahnleitwalzen, die beidseitig von je einer Lagereinrichtung gehalten werden. Die Lagereinrichtungen sind mittels einer sogenannten Stuhlung auf einem Fundament angebracht. Die Stuhlung besteht aus einer Anzahl von senkrecht und horizontal verlaufenden Trägern, auf denen die Lagereinrichtungen befestigt sind. Die Träger, die eine Lagereinrichtung halten, verlaufen horizontal. Insbesondere dann, wenn die Walzen einer Bahnherstellungsmaschine in verschiedenen Ebenen angeordnet sind, bedarf es aufwendiger Trägerkonstruktionen, um die Lagereinrichtungen zu befestigen.

Aus der GB 921296 geht ein Kalander zur Bearbeitung von Papierbogen hervor. Dieser umfasst eine Anzahl von Rollen, die V-förmig an einem ersten und einem zweiten Tragbalken an der Stuhlung angeordnet und entlang dieser verschiebbar sind. Die unterste Rolle weist den größten Durchmesser auf und dient als zentrale Stützrolle. Die Rollen sind entlang des jeweiligen Trägerbalkens verlagerbar, um sie gegenüber der benachbart angeordneten Rolle entsprechend zu positionieren bzw. an diese anzulegen. Zur verlagerung der Rollen ist ein aufwendiger Stellantrieb erforderlich. Außerdem ist zur Festlegung der gewünschten Rollenanordnung eine Fixiereinrichtung erforderlich.

Aus der US 4,705,411 geht eine Lagereinrichtung für Rollen hervor, die eine Durchbiegung der Rolle gestattet. Dies wird dadurch realisiert, daß ein innerer Lagerring gegenüber einem äußerem Lagerring der Lagereinrichtung verkippbar ist.

Die der Erfindung zugrunde liegende Aufgabe besteht darin, eine Maschine gemäß Oberbegriff des Anspruchs 1 zu schaffen, bei der eine einfache und somit kostengünstige Trägerkonstruktion zum Halten der Walzen realisierbar ist.

Zur Lösung dieser Aufgabe wird eine Maschine zur Herstellung einer Bahn vorgeschlagen, die die in Anspruch 1 genannten Merkmale umfaßt. Dadurch, daß mindestens eine Lagereinrichtung den zugehörigen Lagerzapfen der Walze allseitig führt und stützt, kann die Basis dieser Lagereinrichtung unter einem beliebigen Winkel 0° < α < 90° angeordnet werden. Es ist also möglich, die Lagereinrichtungen an allen sich ergebenden, schräg verlaufenden Flächen einer Stuhlung anzubringen und auf spezielle Trägereinrichtungen zu verzichten, die in verschiedenen Ebenen horizontale Auflageflächen für Lagereinrichtungen aufweisen.

Weitere Ausgestaltungen ergeben sich aus den übrigen Unteransprüchen.

Die Erfindung wird im folgenden anhand einer Zeichnung näher erläutert. Es zeigen:
- Figur 1: eine stark schematisierte Seitenansicht eines Teils einer Maschine zur Herstellung einer Bahn und
- Figur 2: eine Prinzipskizze einer im Querschnitt dargestellten Lagereinrichtung.

Die im folgenden beschriebene Maschine zur Herstellung einer Bahn ist vorzugsweise als Papierherstellungsmaschine 1 ausgebildet. Sie weist unter anderem eine Anzahl von in Trockengruppen zusammengefaßten Trockenzylindern auf, um die die Bahn, hier also die Papierbahn, gemeinsam mit einem auch als Trockensieb oder Filz bezeichneten Transportband mäanderförmig herumgeführt wird, wobei zusätzlich bekannte Bahnumlenkwalzen eingesetzt werden können.

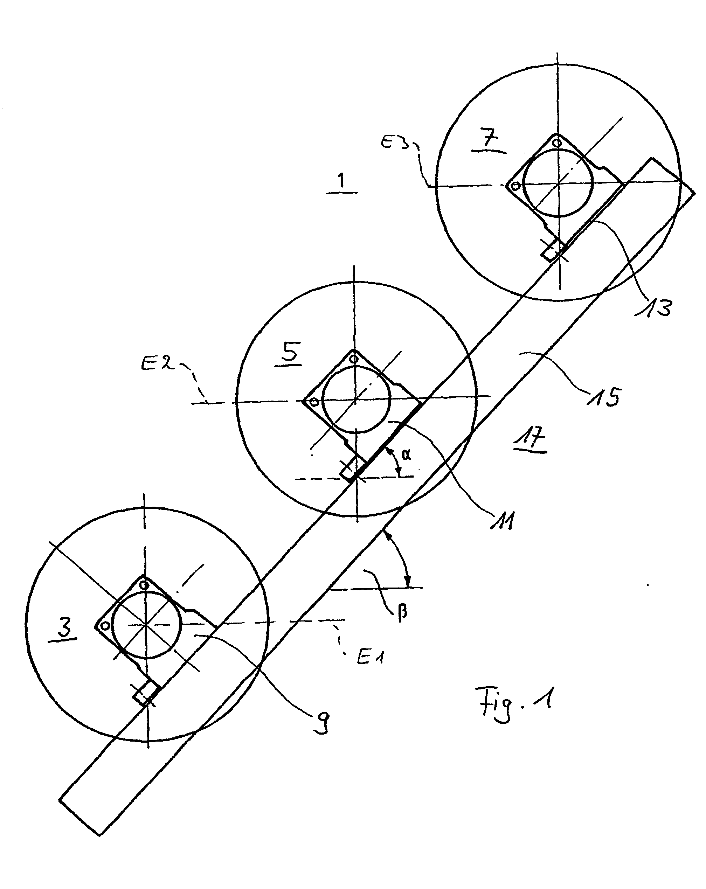

Figur 1 zeigt ein Ausführungsbeispiel eines Teils einer Papierherstellungsmaschine 1, nämlich einer Trockengruppe, innerhalb derer Trockenzylinder V-förmig angeordnet sind. Von den Trockenzylindern der Trockengruppe sind in Figur 1 lediglich die Trockenzylinder 3, 5 und 7 dargestellt. Um die Trockenzylinder 3, 5 und 7 wird eine nicht dargestellte Material- beziehungsweise Papierbahn herumgeführt. Durch die V-förmige Anordnung der Trockenzylinder kann die Länge der Papierherstellungsmaschine reduziert werden.

Die Lagereinrichtungen 9, 11 und 13 für die Trokkenzylinder 3, 5 und 7 sind an einer als Tragbalken 15 ausgebildeten Trägereinrichtung befestigt, die ein Teil einer Stuhlung 17 darstellt. Der Tragbalken 15 der Stuhlung 17 ist hier unter einem Winkel β zu einer gedachten Horizontalen angeordnet. Die Basis der Lagereinrichtungen 9, 11 und 13 verläuft parallel zum Tragbalken 15, also ebenfalls unter einem Winkel α von hier circa 45°. Deutlich ist erkennbar, daß die Mittelpunkte der drei Trockenzylinder 3, 5 und 9 in drei übereinanderliegenden Ebenen E 1, E 2 und E 3 angeordnet sind, und daß bei einer herkömmlichen Stuhlung drei jeweils horizontal verlaufende Tragbalken vorgesehen werden müßten, auf denen herkömmliche Lagereinrichtungen angebracht wären, um die V-förmige Anordnung der Trockenzylinder 3, 5 und 7 zu realisieren. Die Verwendung der erfindungsgemäßen Lagereinrichtungen 9, 11 und 13 führt also zu einer wesentlichen Vereinfachung der Stuhlung 17 und einer Verbesserung der Zugänglichkeit der Papierherstellungsmaschine 1 für Wartungs- und Reparaturarbeiten.

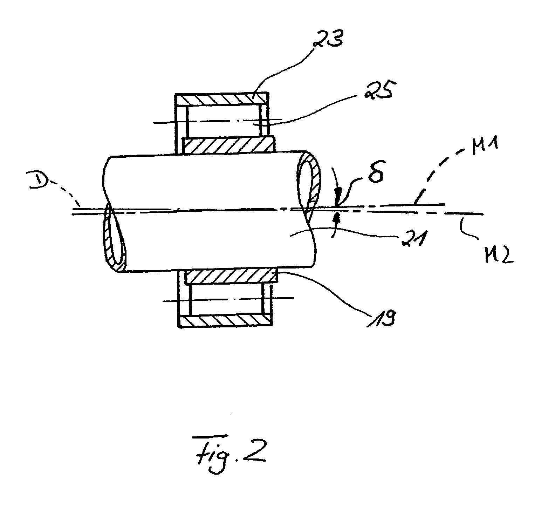

Der Aufbau der hier verwendeten Lagereinrichtungen 9, 11 und 13, die hier alle identisch ausgebildet sind, soll anhand der Prinzipskizze in Figur 2 kurz erläutert werden. Aus Figur 2 ist ersichtlich, daß die in Figur 1 erwähnten Lagereinrichtungen unter anderem zwei im wesentlichen konzentrisch angeordnete Lagerringe aufweisen, wobei der innere Lagerring 19 an einem Wellen- oder Lagerzapfen 21 der Trockenzylinder anliegt, während der äußere Lagerring 23 an einem hier nicht dargestellten Gehäuse der Lagereinrichtung angebracht und mit der hier nicht dargestellten Basis der Lagereinrichtung fest verbunden ist. Zwischen den beiden Lagerringen 19 und 23 sind Lagerelemente 25, vorzugsweise Lagerrollen, vorgesehen, die eine allseitige Abstützung der beiden Lagerringe 19 und 23 derart gewährleisten, daß die Basis der Lagereinrichtung, wie anhand der Figur 1 erläutert, unter einem beliebigen Winkel a angeordnet sein kann. Die Gewichtskräfte, die über den Lagerzapfen 21 in die Lagereinrichtung eingeleitet werden, werden allseitig von dem Gehäuse der Lagereinrichtung abgefangen und in die Basis übergeleitet. Aus Figur 2 ist ersichtlich, daß die Lagereinrichtung so aufgebaut ist, daß die beiden Lagerringe auch in Richtung der Drehachse D des Lagerzapfens 21 gegeneinander verlagerbar sind, und daß die Mittelachsen M 1 und M 2 der beiden Lagerringe auch einen Winkel δ miteinander einschließen können, der beispielsweise 0,5° betragen kann. Da der äußere Lagerring 23 fest mit dem Lagergehäuse und dessen Basis verbunden ist, fällt die Mittelachse M 2 des inneren Lagerrings 25 mit der Drehachse D des Lagerzapfens 21 zusammen. Die Winkelauslenkung ist in Figur 2 stark vergrößert angedeutet.

Bei der Darstellung in Figur 2 wird davon ausgegangen, daß die Mittelachse M 1 des äußeren Lagerringes 23 horizontal verläuft. Die Drehachse D des Lagerzapfens 21 ist gegenüber der Mittelachse M 1 1 bei der hier gewählten Darstellung nicht verlagert beziehungsweise verschwenkt. Damit fällt auch die Mittelachse M 2 des inneren, fest mit dem Lagerzapfen verbundenen Lagerrings 25 mit der Drehachse zusammen. Es ist jedoch gestrichelt die Linie eingezeichnet, die der Mittelachse M 2 entspricht, wenn der Lagerzapfen 21 bei einer Durchbiegung des von der Lagereinrichtung gehaltenen Zylinders ausgelenkt beziehungsweise verlagert wird.

Die erfindungsgemäße Lagereinrichtung kann sowohl zur Lagerung von Trockenzylindern als auch von Bahnleitwalzen eingesetzt werden. Grundsätzlich ist es möglich, die Lagereinrichtung überall dort einzusetzen, wo eine allseitige Abstützung einer Walze erforderlich und/oder eine Vereinfachung der Stuhlung gewünscht ist. Dabei kann die Basis der Lagereinrichtung an einer Schräge unter einem Winkel 0° < α < 90° zu einer gedachten Horizontalen angeordnet sein.

Insgesamt ist ersichtlich, daß durch die allseitige Führung und Abstützung der Lagerzapfen 21 innerhalb der Lagereinrichtungen sehr variable Montagemöglichkeiten gegeben sind, so daß durch die Verwendung dieser Lagereinrichtungen der Aufbau der Stuhlung sehr vereinfacht werden kann. Durch den inneren Aufbau der Lagereinrichtungen können Montagetoleranzen und insbesondere Wärmedehnungen von Trockenzylindern optimal abgefangen werden, ohne daß eine übermäßige Belastung der Lager und der Stuhlung eintreten würde. Die Maschine zur Herstellung einer Bahn beziehungsweise Papierherstellungsmaschine kann daher sehr einfach und kompakt und damit kostengünstig aufgebaut sein. Durch die Vereinfachung der Stuhlung ergeben sich auch große Vorteile bei Wartungs- und Kontrollarbeiten innerhalb der Maschine, da die Zugänglichkeit der einzelnen Teile der Maschine, beispielsweise von den Trockenzylindern und Bahnleitwalzen zuordenbaren Schabereinrichtungen und dergleichen, wesentlich erleichtert ist.

Durch die Verwendung der hier beschriebenen Lagereinrichtungen ergeben sich also sehr weitreichende Möglichkeiten, die Stuhlung einer Maschine zur Herstellung einer Bahn beziehungsweise einer Papierherstellungsmaschine wesentlich zu vereinfachen.

## Patentansprüche

1. Maschine (1 zur Herstellung einer Bahn, insbesondere einer Papier- oder Kartonbahn, mit einer Anzahl von Walzen (3;5;7), die beidseitig mit einem Lagerzapfen (21) versehen sind, die von je einer Lagereinrichtung (9,11,13) gehalten werden, wobei mindestens eine Lagereinrichtung (9,11,13) so ausgebildet ist, daß der Lagerzapfen (21) allseitig so geführt ist, daß die Basis der Lagereinrichtung (9,11,13) unter einem beliebigen Winkel 0° < α < 90° anordenbar ist, **dadurch gekennzeichnet, daß** die Lagereinrichtung (9,11,13) an einer Trägereinrichtung befestigt ist und daß die Lagereinrichtung (9,11,13) derart ausgebildet ist, daß die Gewichtskräfte der Walze (3;5;7) allseitig von einem Gehäuse der Lagereinrichtung (9,11,13) vollständig abgefangen werden.

2. Maschine nach Anspruch 1, **dadurch gekennzeichnet, daß** die Lagereinrichtung (9,11,13) in Richtung der Drehachse der Walze zueinander verlagerbare Lagerringe (19,23) aufweist.

3. Maschine nach Anspruch 1, **dadurch gekennzeichnet, daß** die Lagereinrichtung (9,11,13) Lagerringe (23,25) aufweist, deren Mittelachsen (M 1, M 2) einen Winkel (δ) zueinander einschließen können.

4. Maschine nach Anspruch 1 oder 2, **dadurch gekennzeichnet, daß** die Lagereinrichtung (9,11,13) an einem Träger (15) anbringbar ist, der -zur Realisierung einer V-förmigen Anordnung der Walzen- unter einem Winkel β von 10° ≤ β≤80°, insbesondere von 25° ≤ β ≤ 60° und vorzugsweise von 35° ≤ β ≤ 50° angeordnet ist.

5. Maschine nach einem der vorhergehenden Ansprüche, **dadurch gekennzeichnet, daß** die Lagereinrichtung (9,11,13) zur Lagerung von Trockenzylindern (3;5;7) und/oder Bahnleitwalzen verwendet wird.

## Claims

1. Machine (1) for producing a web, in particular a paper or board web, having a number of rolls (3; 5; 7) which are provided with a bearing journal (21) on both sides, which are each held by a bearing device (9, 11, 13), at least one bearing device (9, 11, 13) being designed in such a way that the bearing journal (21) is guided on all sides such that the base of the bearing device (9, 11, 13) can be arranged at any desired angle 0° < α < 90°, **characterized in that** the bearing device (9, 11, 13) is fixed to a supporting device, and **in that** the bearing device (9, 11, 13) is designed in such a way that the forces arising from the weight of the roll (3; 5; 7) are absorbed completely on all sides by a housing of the bearing device (9, 11, 13).

2. Machine according to Claim 1, **characterized in that** the bearing device (9, 11, 13) has bearing rings (19, 23) which can be displaced in relation to one another in the direction of the axis of rotation of the roll.

3. Machine according to Claim 1, **characterized in that** the bearing device (9, 11, 13) has bearing rings (23, 25) whose mid-axes (M 1, M 2) can include an angle (δ) in relation to each other.

4. Machine according to Claim 1 or 2, **characterized in that** the bearing device (9, 11, 13) can be fitted to a support (15) which - in order to implement a V-shaped arrangement of the rolls - is arranged at an angle β of 10° ≤ β ≤ 80°, in particular of 25° ≤ β ≤ 60° and preferably of 35° ≤ β ≤ 50°.

5. Machine according to one of the preceding claims, **characterized in that** the bearing device (9, 11, 13) is used for mounting drying cylinders (3; 5; 7) and/or web guide rolls.

## Revendications

1. Machine (1) pour la fabrication d'une bande, notamment d'une bande de papier ou de carton, comprenant une pluralité de rouleaux (3; 5; 7) qui sont pourvus des deux côtés d'un tourillon (21), qui sont maintenus chacun par un dispositif de palier (9, 11, 13), au moins un dispositif de palier (9, 11, 13) étant réalisé de telle sorte que le tourillon (21) soit guidé de tous côtés de telle sorte que la base du dispositif de palier (9, 11, 13) puisse être disposée suivant un angle quelconque 0° < α < 90°, **caractérisée en ce que** le dispositif de palier (9, 11, 13) est fixé sur un dispositif de support et **en ce que** le dispositif de palier (9, 11, 13) est réalisé de telle sorte que les forces de pesanteur des rouleaux (3; 5; 7) soient supportées complètement de tous les côtés par un boîtier du dispositif de palier (9, 11, 13) .

2. Machine selon la revendication 1, **caractérisée en ce que** le dispositif de palier (9, 11, 13) présente, dans la direction de l'axe de rotation des rouleaux, des bagues de palier (19, 23) déplaçables l'une par rapport à l'autre.

3. Machine selon la revendication 1, **caractérisée en ce que** le dispositif de palier (9, 11, 13) présente des bagues de palier (23, 25) dont les axes médians (M1, M2) peuvent former entre eux un angle (δ).

4. Machine selon la revendication 1 ou 2, **caractérisée en ce que** le dispositif de palier (9, 11, 13) peut être monté sur un support (15) qui est disposé suivant un angle β de 10° ≤ β ≤ 80°, notamment de 25° ≤ β ≤ 60°, et de préférence de 35° ≤ β ≤ 50°, pour la réalisation d'un agencement des rouleaux en forme de V.

5. Machine selon l'une quelconque des revendications précédentes, **caractérisée en ce que** le dispositif de palier (9, 11, 13) est utilisé pour le support de cylindres de séchage (3 ; 5 ; 7) et/ou de rouleaux conducteurs de bande.
